# EUROPÄISCHE PATENTANMELDUNG

(11) **EP 1 983 406 A1**
(43) Veröffentlichungstag der Anmeldung: **22.10.2008**
(21) Anmeldenummer: 07106644.3
(22) Anmeldetag: 20.04.2007
(51) Int. Cl.: G06F 3/03

(54) **Verfahren und Vorrichtung zur Eingabe von Daten in eine Datenverarbeitungsanlage**

(71) Anmelder: Enwemedia GMBH, 92711 Parkstein (DE)
(72) Erfinder: Weig, Norbert, 92711, Parkstein (DE)
(74) Vertreter: Lang, Christian

(57) **Zusammenfassung**

Die vorliegende Erfindung betrifft eine Vorrichtung zur Anzeige und/oder Eingabe einer Bildschirmposition in eine Datenverarbeitungsanlage mit einem Monitor bzw. ein Verfahren für die exakte Positionsermittlung eines Zeigegeräts einer derartigen Vorrichtung in Bezug auf den Monitor. Die Vorrichtung umfasst mindestens ein Zeigegerät, welches eine optische Erfassungseinrichtung aufweist und Mittel für eine Daten- und/oder Signalverbindung mit der Datenverarbeitungsanlage besitzt, wobei ein Bezugspunktemodul zur Erzeugung von Bezugspunkten auf dem Monitor und ein Verarbeitungsmodul zur Verarbeitung der Daten und/oder Signale von der optischen Erfassungseinrichtung vorgesehen sind, wobei ein Positionsbestimmungsmodul zur Bestimmung der Raumposition des Zeigegeräts durch Vergleich der Lagepositionen der Bezugspunkte auf dem Monitor und der durch die Erfassungseinrichtung crfasstcn Daten und/oder Signale vorgesehen ist.

## Beschreibung

### GEBIET DER ERFINDUNG

Die vorliegende Erfindung betrifft ein Verfahren, eine Vorrichtung sowie ein Computerprogrammprodukt zur Bestimmung einer Monitorposition und/oder zur Eingabe von Daten in eine Datenverarbeitungsanlage mit einem Monitor, wobei die Vorrichtung mindestens ein Zeigegerät umfasst, welches eine optische Erfassungseinrichtung aufweist und Mittel für eine Daten- und/oder Signalverbindung mit der Datenverarbeitungsanlage umfasst.

### STAND DER TECHNIK

Aus dem Stand der Technik ist eine Vielzahl von Eingabevorrichtungen für Datenverarbeitungsanlagen bekannt. Neben klassischen Eingabegeräten wie Tastaturen, Maus, Lesemitteln für Speichermedien und dergleichen, hat es vielfältige Anstrengungen gegeben neue Möglichkeiten zu schaffen, eine Eingabe mittels eines Stiftes so zu gestalten, wie dies beim Schreiben mit einem Stift auf Papier möglich ist. Hierzu sind Stifte bekannt, die mit so genannten Tablets zusammen wirken oder durch Kontakt mit aktiven Bildschirmoberflächen arbeiten.

Bei diesen Eingabevorrichtungen unterscheidet man üblicherweise zwischen Paaren aus aktiven Stiften und einer passiven Schreibunterlage einerseits sowie aktiven Schreibunterlagen und passiven Stiften andererseits. Das Zusammenwirken von Stift und Schreibunterlage kann auf vielfältigste Art und Weise erfolgen, wobei unterschiedlichste physikalische Effekte ausgenutzt werden. Ein Beispiel ist hier das Zusammenwirken von Stift und Schreibunterlage durch Krafteinwirkung, also Druckerzeugung, um beispielsweise elektrische Verbindungen zwischen Schichten eines aktiven Monitors zu erzeugen (drucksensitiver Monitor). Darüber hinaus können elektromagnetische Wechselwirkungen zwischen einem Stift und einem entsprechend hergerichteten Tablet oder umgekehrt genutzt werden. Auch optische Einrichtungen sind aus dem Stand der Technik bekannt, um Eingabegeräte für Datenverarbeitungsanlagen zu schaffen.

Ein Beispiel hierfür ist in der US 2002/0163511 A1 gegeben. Dieses Dokument beschreibt eine optische Positionsbestimmung auf jeglicher Oberfläche, wobei hier drei verschiedene Verfahren teilweise miteinander kombiniert werden. Diese Verfahren betreffen die sog. Triangulation, die Musterabstimmung sowie eine positionsbezogene Codierung.

Grundlage aller dieser einzelnen Verfahren sowie der Kombination daraus ist eine Digitalkamera, die an dem Stift angeordnet ist und den Schreibbereich erfasst, auf dem mit dem Stift geschrieben wird. Mittels der Kamera kann in dem Schreibbereich eine Triangulation von erfassten Punkten, beispielsweise den Eckpunkten des Schreibbereichs, sowie ein Musterabgleich bzgl. der bereits geschriebenen Abschnitte erfolgen. Dazu werden entweder bestehende Bilder auf einer Oberfläche oder Markierungen, wie sie durch das Schreiben erzeugt werden, verwendet.

Bei einem derartigen Verfahren ist jedoch der Rechenaufwand zur Bestimmung der Position aufgrund der mehreren überlagerten Verfahren sehr hoch. Außerdem ist durch die nicht genaue Spezifikation der Bezugspunkte die Bestimmung der Position relativ ungenau.

Aus der WO 2006/065045 A1 sind ein System und ein Verfahren zur Bestimmung der absoluten Koordinaten bekannt, bei welchem bestimmte, definierte Muster zur Positionsbestimmung verwendet werden. Das entsprechende Muster wird auf einem Tablet, wie in Figur 9 der WO 2006/065045 A1 gezeigt ist, erzeugt.

Durch eine einfache Kodierung des Musters kann eine relativ einfache Positionsbestimmung mittels eines mit einer Kamera ausgestatteten Stiftes erfolgen. Nachteilig ist hierbei jedoch, dass auf der Schreibunterlage ein sehr aufwändiges Muster mit einer umfangreichen Codierung angebracht werden muss.

### OFFENBARUNG DER ERFINDUNG

### AUFGABE DER ERFINDUNG

Die vorliegende Erfindung hat zur Aufgabe, eine Eingabevorrichtung für eine Datenverarbeitungsanlage sowie ein entsprechendes Verfahren zur Bestimmung der Position eines Zeigegeräts bzw. zur Eingabe von Daten in eine Datenverarbeitungsanlage zu schaffen, mit welcher bzw. welchem eine variable Dateneingabe mit einfachen Mitteln möglich ist. Insbesondere soll mit der Eingabevorrichtung bzw. dem entsprechenden Verfahren eine Möglichkeit geschaffen werden, auf einem Bildschirm ein elektronisches Bild zu malen oder zu zeichnen, wobei insbesondere die Möglichkeit geschaffen sein soll, jeden beliebigen Bildschirm als Leinwand für unterschiedliche Mal- oder Zeichentechniken zu nutzen. Insbesondere soll es vorzugsweise nicht erforderlich sein, einen Kontakt zwischen Stift oder Pinsel und der Bildschirmoberfläche zu erzeugen, so dass auch Sprüh- oder Spritztechniken für das elektronische Malen möglich sein sollen. Dadurch soll auch eine Beschädigung, beispielsweise durch Verkratzen der Bildschirmoberfläche vermieden werden, so dass die Oberfläche des Bildschirms geschont wird bzw. eine kratzfeste Ausgestaltung der Bildschirmoberfläche unnötig ist.

### TECHNISCHE LÖSUNG

Diese Aufgabe wird gelöst mit einer Vorrichtung mit den Merkmalen des Anspruchs 1 und einem Verfahren mit den Merkmalen des Anspruchs 19 sowie einem Computerprogrammprodukt mit den Merkmalen des Anspruchs 28. Vorteilhafte Ausgestaltungen sind Gegenstand der abhängigen Ansprüche.

Die vorliegende Erfindung schlägt eine Vorrichtung für eine Datenverarbeitungsanlage mit einem Monitor zur Anzeige oder Eingabe einer Bildschirmposition vor, bei welcher ein Zeigegerät, welches eine insbesondere optische Erfassungseinrichtung aufweist, über geeignete Mittel für eine Daten- und/oder Signalverbindung mit der Datenverarbeitungsanlage verbunden ist. Mit einer entsprechenden Vorrichtung ist es also möglich über das Zeigegerät den Cursor über die Bildschirmanzeige einer Datenverarbeitungsanlage zu bewegen bzw. diesen dort zu positionieren und an den entsprechenden Stellen Eingaben auszuführen, beispielsweise in Form eines Farbpunktes oder einer Farbfläche.

Unter Bildschirm oder Monitor, die hier als Synonym verwendet werden, sind sämtliche vergleichbaren Anzeigegeräte zu verstehen, egal welcher Größe und welcher Technologie. Diese umfassen also Bildschirme, Displays, Monitore oder dergleichen von sogenannten Hand-Held-PCs, Smart Phones, Handys, Notebooks bis zu großflächigen Flachbildschirmen, die auch als Fernseher genutzt werden können sowie sonstige mit Datenverarbeitungsanlagen verbindbare Anzeigegeräte wie Projektionseinrichtungen, Beamer und dgl.

Unter "Bildschirm- und/oder Monitorposition" ist hier im einfachsten Falle die zweidimensionale Positionierung eines Cursors auf dem Bildschirm oder Monitor durch das Zeigegerät zu verstehen. Dabei entspricht eine zweidimensionale Position x, y des Zeigegeräts einer entsprechenden zweidimensionalen Position x', y' des Cursors auf dem Bildschirm oder Monitor. Darüber hinaus umfasst der Begriff "Bildschirm- oder Monitorposition" über die reine zweidimensionale Positionierung hinaus auch zusätzliche Informationen hinsichtlich der Ausrichtung und Orientierung des dreidimensionalen Zeigegeräts. Beispielsweise kann bei einem länglichen stiftartigen Zeigegerät die Raumrichtung der Längsachse sowie eine Drehposition um die Längsachse in die Bildschirmposition mit einfließen. Dies kann einerseits die zweidimensionale Position des Cursors auf dem Bildschirm oder Monitor betreffen, in dem beispielsweise die Verlängerung der Längsachse des Zeigegeräts zur x'-, y'-Positionsbestimmung des Cursors auf dem Bildschirm herangezogen wird, beispielsweise durch fiktive Verlängerung der Längsachse bis zu einem Schnittpunkt mit der Bildschirmebene. Darüber hinaus kann die Bildschirm- oder Monitorposition die zusätzlichen Informationen über die Ausrichtung und Orientierung des Zeigegeräts auch dadurch umfassen, dass die Darstellung der Bildschirmposition durch die Raumorientierung und Ausrichtung des Zeigegeräts bestimmt wird oder Zusatzinformationen enthält. So kann bei einer schrägen Winkelposition des Zeigegeräts zur Bildschirm- oder Monitorebene die dargestellte Bildschirmposition gegenüber einer senkrechten Orientierung des Zeigegeräts dahingehend abgeändert sein, dass kein kreisrunder Bildpunkt, sondern ein ovaler oder verzerrter Bildpunkt dargestellt wird. Außerdem kann beispielsweise der Abstand des Zeigegeräts von der Bildschirmebene die Größe des dargestellten Bildpunktes beeinflussen. Darüber hinaus können einzelnen Parametern der Orientierung oder Positionierung des Zeigegeräts weitere Darstellungsfunktionen zugeordnet werden.

Unter "Cursor" ist hierbei jede beliebige visualisierte Darstellung der Bildposition oder auch jede Zuordnung einer Bildschirmposition, welche zwar erfasst aber nicht angezeigt wird, zu verstehen.

Gemäß der Erfindung ist die Vorrichtung so aufgebaut, dass einerseits ein Bezugspunktemodul vorgesehen ist, welches mindestens einen, vorzugsweise mehrere Bezugspunkte auf dem Monitor erzeugen und darstellen kann. Gleichzeitig ist ein Verarbeitungsmodul zur Verarbeitung der Daten und/oder Signale von der optischen Erfassungseinrichtung vorgesehen. Darüber hinaus soll eine Positionsbestimmungseinheit vorhanden sein, die durch Vergleich der Lageposition der Bezugspunkte auf dem Monitor und der durch die Erfassungseinrichtung erfassten Daten und/oder Signale, welche durch zumindest einen Teil der Bezugspunkte verursacht sind, eine Bestimmung der Raumposition und/oder Orientierung oder Ausrichtung des Zeigegeräts im Bezug zum Monitor ermöglicht.

Unter Bezugspunkte können sichtbare oder für Menschen unsichtbare Bezugspunkte verstanden werden, solange sie lediglich für die optische Erfassungseinrichtung des Zeigegeräts zu erfassen sind. Insgesamt können die Bezugspunkte als Lichtpunkte mit bestimmter Wellenlänge und Lichtintensität und dergleichen erzeugt werden, die auch auf die optische Erfassungseinheit abgestimmt sind. Die Bezugspunkte können in unterschiedlichster Form und Gestalt erzeugt werden, beispielsweise als Linienraster, einzelne Punkte oder Flächen. Entsprechend können die Bezugspunkte eindimensional oder zweidimensional in einer geordneten oder ungeordneten Anordnung vorgesehen sein. Darüber hinaus können die Bezugspunkte, die, wie oben erwähnt, nicht auf Punkte beschränkt sind, statisch oder dynamisch sein, also zeitlich veränderlich, insbesondere über den Bildschirm bewegbar oder zeitlich und/oder örtlich konstant sein.

Durch die Darstellung der Bezugspunkte auf dem Monitor durch das Bezugspunktemodul sind die Positionen der Bezugspunkte auf dem Monitor bekannt, so dass mit Kenntnis der Bezugspunkte und mit den erfassten und/oder verarbeiteten Daten und/oder Signalen der optischen Erfassungseinrichtung eine Positionsbestimmung des Zeigegeräts möglich ist. Da das Zeigegerät in Form eines Stifts, Pinsels oder eines ähnlichen Zeichengeräts ausgebildet sein kann, wird das Zeigegerät im Folgenden auch als Stift bezeichnet.

Ferner kann die Vorrichtung ein Eingabemodul aufweisen, welches für die Eingabe von Einstellungs- und/oder Bediendaten vorgesehen ist. Über das Eingabemodul können Eingaben unterschiedlichster Geräte, wie beispielsweise des Zeigegeräts, von Tastaturen, Speichermitteln, Lesegeräten, von aktiven und insbesondere drucksensitiven Displays, über Datenfernleitungen und/oder über Netzwerke eingegeben werden.

Darüber hinaus kann ein Bilderzeugungsmodul vorgesehen sein, mit welchem Bilddaten zur Anzeige auf dem Monitor erzeugt werden können, beispielsweise durch Erzeugung von bestimmten Punkten, Flächen und dergleichen an einer entsprechenden Position an die der Cursor mit Hilfe des Zeigegeräts bewegt wird.

Das Bilderzeugungsmodul kann vorzugsweise so ausgestaltet sein, dass mit dem Zeigegerät auf dem Bildschirm bzw. Monitor geschrieben oder gemalt, gezeichnet, oder ähnliches durchgeführt werden kann. Das Bilderzeugnismodul kann graphische Daten oder allgemein Anzeigedaten jeder Art erzeugen.

Die verschiedenen Module sind vorzugsweise als ausführbare Programmeinheiten auf einer Datenverarbeitungsanlage ausführbar, wobei alle Module in einem einzigen Programmprodukt oder in verschiedenen miteinander zusammenwirkenden Produkten enthalten sein können. Statt einer Datenverarbeitungsanlage können auch mehrere Datenverarbeitungsanlagen vorgesehen sein, wobei Module ganz oder teilweise auf unterschiedlichen Datenverarbeitungsanlagen verwirklicht werden können. Beispielsweise können einzelne Module oder Teile davon in Datenverarbeitungseinheiten ausgeführt werden, die in dem Zeigegerät und/oder einem Zusatzgerät, welches beispielsweise zwischen Datenverarbeitungsanlage und Zeigegerät zwischengeschaltet ist, enthalten sind.

Um immer eine gute Feststellung der Positionierung und/oder Orientierung oder Ausrichtung des Zeigegeräts vornehmen zu können, können das Positionsbestimmungsmodul und das Bezugspunktemodul derart miteinander gekoppelt sein, dass in Abhängigkeit von der Position und Ausrichtung des Zeigegeräts das Bezugspunktemodul angepasste Bezugspunkte auf dem Bildschirm erzeugt. Die Abhängigkeit der Bezugspunkteerzeugung von der Position und/oder Orientierung oder Ausrichtung des Zeigegeräts kann ich einer kontinuierlichen fortlaufenden Rückkopplung in Art eines Regelkreises erfolgen oder lediglich unter Berücksichtigung der zuletzt ermittelten Position und/oder Orientierung oder Ausrichtung des Zeigegeräts erfolgen. Entsprechend kann somit auf die Berücksichtigung eines Bewegungsverlaufs des Zeigegeräts verzichtet oder dieser berücksichtigt werden.

Die erfindungsgemäße Vorrichtung umfasst weiterhin, wie oben bereits erwähnt, ein Zeigegerät. Die Mittel für die Daten- und/oder Signalverbindung des Zeigegeräts können durch kabelgebundene oder drahtlose Verbindungen verwirklicht sein, wobei insbesondere Signalschnittstellen der Datenverarbeitungsanlage genutzt werden können. Beispielsweise können üblicherweise an Rechnern, Laptops, PCs und dergleichen vorhandene Mikrophonschnittstellen verwendet werden. Dies ist besonders dann vorteilhaft nutzbar, wenn die optische Erfassungseinrichtung einen entsprechenden Sensor aufweist, der entsprechende Ausgangssignale zur Verfügung stellt, wie dies beispielsweise bei einem einfachen Flächendetektor gegeben ist, der in Abhängigkeit der auftreffenden Lichtintensität ein Strom- und/oder Spannungssignal erzeugt.

Die Sensoreinrichtung der optischen Erfassungseinrichtung kann ansonsten jeglichen geeigneten Sensor zur Erfassung irgendwelcher Signale von den Bezugspunkten auf dem Monitor umfassen, wie insbesondere Flächendetektoren, punktförmige Detektoren, ortsauflösende optische Sensoren, CCD-Chips, CMOS-Chips und dergleichen.

Die optische Erfassungseinrichtung kann neben einer Sensoreinrichtung eine Abbildungseinrichtung zur Abbildung von mindestens einem Teil des Monitors umfassen, wobei entsprechende Blenden, optische Linsen, Spiegel und/oder Filter oder vergleichbare optische Elemente, wie Prismen oder dergleichen vorgesehen sein können. Die Abbildungseinrichtung kann auch eine Fokussiereinrichtung umfassen. Unter Abbildungseinrichtung wird hier auch eine einfache Blendenanordnung verstanden, welche nicht zu einer bildgemäßen Abbildung geeignet ist, sondern lediglich eine Begrenzung des Lichteinfalls auf die Sensoreinrichtung der optischen Erfassungseinrichtung ermöglicht. Gleichwohl sind jedoch auch Abbildungseinrichtungen möglich, die eine vergrößerte oder verkleinerte Wiedergabe eines Ausschnitts oder des gesamten Monitors in Form einer Abbildung bewirken. Dies ist insbesondere bei der Verwendung von ortsauflösenden optischen Sensoren oder CCD-Chips vorteilhaft.

Die Erfassungseinrichtung erfasst unmittelbar Signale, z. B. über den Detektor, die entweder unmittelbar oder in verarbeiteter Form als Daten weitergeleitet bzw. bereitgestellt werden. Dazu kann die Erfassungseinrichtung eine entsprechende Verarbeitungseinheit aufweisen.

Das Zeigegerät kann in einer einfachen Ausgestaltung ein Gehäuse aus lichtundurchlässigen Elementen aufweisen, welches einen oder mehrere Sensorräume zur Aufnahme einer oder mehrerer Sensoreinrichtungen bildet. Der Sensorraum kann lediglich eine Öffnung zum Einlassen von Licht in den Sensorraum aufweisen, wobei die Sensoreinrichtung, beispielsweise ein Flächendetektor, so angeordnet ist, dass aufgrund der Geometrie des Sensorraums nur Licht eines bestimmten Lichtkegels mit einem definierten Öffnungswinkel auf die Sensoreinrichtung gelangen kann. Dieser ist im Wesentlichen durch die diagonale Verbindung gegenüberliegender Randpunkte von Sensoreinrichtung bzw. Flächendetektor und Öffnung definiert.

Die Wahl der Anordnung der Sensoreinrichtung im Sensorraum, d.h. die Wahl der Dimensionen der Seitenwände, des Abstandes der Sensoreinrichtung mit der aktiven Sensorfläche von der Lichtöffnung sowie die Größenverhältnisse von Öffnung des Sensorraumes zur aktiven Sensorfläche etc. können so gewählt werden, dass gemäß der Anwendung der Erfindung Intensitätsunterschiede ermittelbar sind, die zur Bestimmung der Position und Ausrichtung des Zeigegeräts ausreichen. Sowohl der flächenhafte Sensor als auch die Lichteinlassöffnung können entsprechenden Formen aufweisen, beispielsweise rund, oval oder eckig sein.

Vorzugsweise kann das Zeigegerät als Pinsel, Stift oder Zeichengerät ausgebildet sein, so dass zusätzliche Vorrichtungen, wie Fasern oder Borsten für Pinsel, insbesondere transparente Fasern oder Borsten oder Kugelköpfe, insbesondere mit transparenten Kugeln zusätzlich vorgesehen sein können.

Die Vorrichtung ermöglicht eine Bestimmung der Position und Ausrichtung des Zeigegeräts durch Bereitstellung von Bezugspunkten auf dem Monitor und Erfassen von Eigenschaften der Bezugspunkte durch die optische Erfassungseinrichtung des Zeigegeräts, so dass daraus Informationen über die Position und Ausrichtung des Zeigegeräts gewonnen werden können.

Die Bezugspunkte können genutzt werden, um durch Relationen zueinander und durch Vergleich der entsprechenden Relationen bzgl. der erzeugten Bezugspunkte und der ermittelten Bezugspunkte Rückschlüsse auf die Position und Ausrichtung des Zeigegeräts zu gewinnen.

Ferner ist es auch möglich, einfache Veränderungen der Bezugspunkte und dadurch ausgelöste Intensitätsänderungen oder Überlagerung der Lichtintensitäten von den Bezugspunkten zur Bestimmung der Position und Ausrichtung des Zeigegeräts zu nutzen.

Entsprechend kann die Darstellung eines einzigen Bezugspunktes ausreichend sein.

Vorzugsweise können mindestens drei Bezugspunkte auf dem Monitor dargestellt werden, die eine Ebene aufspannen, um eine Positionsbestimmung des Zeigegeräts zu ermöglichen.

Die Bezugspunkte können statisch oder dynamisch sein, d.h. während ihrer Anzeige unveränderlich oder veränderlich sein. Dies kann sowohl die Position der Bezugspunkte betreffen, d.h. die Bezugspunkte können beweglich sein, als auch andere variierbare Eigenschaften, wie beispielsweise die Darstellungswellenlänge, also die Farbe, die Anzahl, die Verteilung, die Form der Bezugspunkte usw. Mit diesen Zusatzeigenschaften der Bezugspunkte kann die Bestimmung der Position und der Ausrichtung des Zeigegeräts vereinfacht werden.

Ferner ist es auch möglich, gleichzeitig unterschiedliche Bezugspunkte mit Unterschieden in Bezug auf die Darstellung, Form, Farbe usw. zu erzeugen, was ebenfalls die Positionsbestimmung für das Zeigegerät vereinfacht.

Insbesondere kann die Darstellung der Bezugspunkte hinsichtlich der Anzahl und Verteilung auf dem Monitor aber auch im Hinblick auf Lichtintensität, gewählte Farbe, Wellenlänge und dergleichen in Abhängigkeit von der ermittelten Position und Ausrichtung des Zeigegeräts verändert werden.

Neben der Abhängigkeit der Darstellung der Bezugspunkte von der Position des Zeigegeräts, kann die Abhängigkeit auch oder alternativ von dem ansonsten auf dem Bildschirm dargestellten Bilddaten gegeben sein. Sind beispielsweise die Bezugspunkte als grüne Punkte vorgesehen und werden auf dem Bildschirm vermehrt grüne Flächen dargestellt, kann eine Umwandlung der Farbe der Bezugspunkte, z.B. in Richtung blau, rot oder dergleichen erfolgen.

Nach weiteren Aspekten der Erfindung wird auch für die einzelnen Komponenten unabhängiger Schutz begehrt, insbesondere für ein Computerprogrammprodukt, welches speicherbaren Code in Form von Signalfolgen aufweist, die bei Ausführung auf einer Datenverarbeitungsanlage eine Durchführung das erfindungsgemäße Verfahren ermöglichen.

### KURZBESCHREIBUNG DER FIGUREN

Weitere Vorteile, Kennzeichen und Merkmale der vorliegenden Erfindung werden bei der nachfolgenden detaillierten Beschreibung von Ausführungsbeispielen anhand der beigefügten Figuren deutlich. Die Figuren zeigen hierbei in rein schematischer Weise in
- Figur 1: eine perspektivische Darstellung einer Anordnung aus Datenverarbeitungsanlage, Monitor und einem ersten Zeigegerät;
- Figur 2: eine perspektivische Darstellung der Wirkungsweise der Abbildung des Monitors in einem ersten Zeigegerät und Funktion der Berechnung der Position;
- Figur 3: eine Seitenansicht von Monitor und einem zweiten Ausführungsbeispiel eines Zeigegeräts;
- Figur 4: ein Diagramm zur Darstellung des Intensitätsverlaufs für Bildprodukte x₁ bis x₄ für das Zeigegerät aus Fig. 3;
- Figur 5: eine Darstellung einer weiteren Ausführungsform eines Zeigegeräts; und in
- Figur 6: ein Diagramm zum Verfahrensablauf.

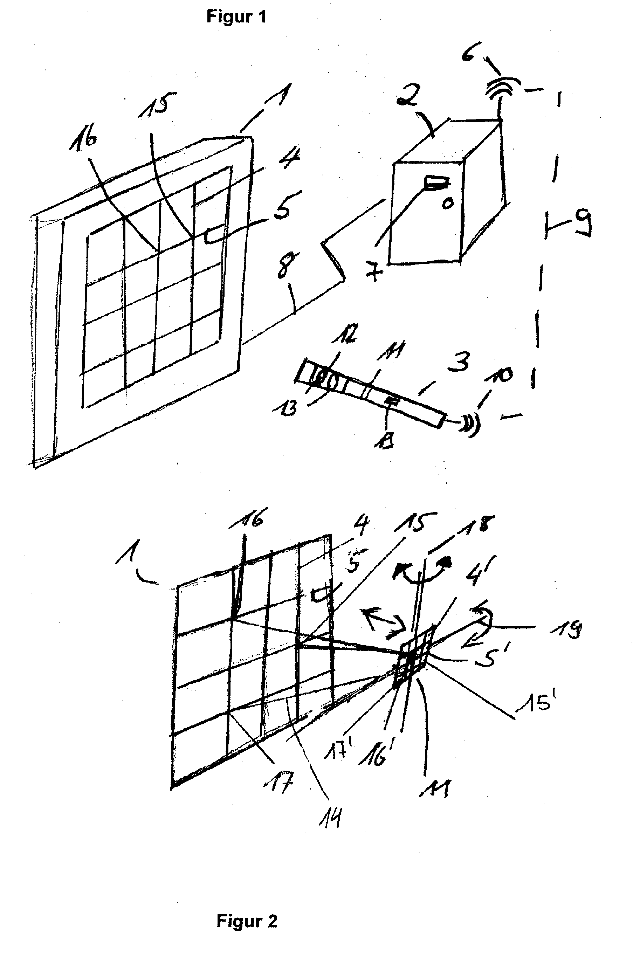

Die Figur 1 zeigt in einer perspektivischen Darstellung die Anordnung eines Monitors 1 bzgl. eines Zeigegeräts 3, mit welchem eine Anzeige und/oder Eingabe in eine Datenverarbeitungsanlage 2 zumindest in der Weise möglich ist, dass durch eine exakte Positions- und/oder Ausrichtungs-/Orientierungsbestimmung des Zeigegeräts 3 eine Zuordnung eines Cursors und/oder entsprechender Darstellungsinformationen auf dem Bildschirm 1 also eine Bildschirmpositionierung möglich wird. Darüber hinaus kann ein entsprechendes Eingabefeld oder dergleichen, welches auf dem Bildschirm 1 angezeigt wird durch das Zeigegerät ausgewählt und angesprochen werden. Ferner ist das Zeigegerät 3 gemäß der vorliegenden Erfindung so ausgestaltet, dass mittels des Zeigegeräts und einer verbundenen Datenverarbeitungsanlage eine direkte Eingabe über den Bildschirm getätigt werden kann, also das Zeigegerät 3 als Stift bzw. Zeichengerät ausgebildet ist. Im Nachfolgenden wird somit das Zeigegerät 3 auch als Stift bezeichnet. Die direkte Zeicheneingabe oder Malfunktion kann insbesondere automatisch in Abhängigkeit der Position des Zeigegeräts, also z.B. der Entfernung, erfolgen oder durch Betätigung eines Schalters 19.

Auf dem Monitor 1 werden durch ein Bezugspunktemodul Bezugspunkte 15 und 16 erzeugt, die durch Schnittpunkte von Linien 4 und 5 entstehen, welche senkrecht zueinander in regelmäßigem Abstand auf dem Monitor erzeugt werden.

Im gezeigten Ausführungsbeispiel sind beispielsweise drei senkrechte Linien 4 und ebenso drei horizontale Linien 5 auf dem Bildschirm 1 angezeigt, so dass sich insgesamt neun Schnittpunkte, d. h. Bezugspunkte 15, 16 ergeben. Die Anzahl der Linien 4, 5 sowie der Schnittpunkte, d. h. Bezugspunkte 15, 16 ist variabel einstellbar und erzeugbar. Entsprechend sind auch andere Darstellungsformen der Bezugspunkte 15, 16 denkbar.

Zur Kommunikation ist zwischen der Datenverarbeitungsanlage 2 und dem Monitor 1 eine Daten- und/oder Signalleitung 8 vorgesehen, mit welcher die Daten zur Erzeugung der Bezugspunkte von dem Bezugspunktemodul an den Monitor 1 übermittelt werden können. Außerdem dient die Daten- und/oder Signalleitung allgemein zur Ansteuerung des Bildschirms und zur Übertragung von Bilddaten, die am Monitor angezeigt werden sollen.

Die Datenverarbeitungsanlage 2 steht weiterhin auch in Verbindung mit dem Zeigegerät bzw. Stift 3. Die entsprechende Daten- und/oder Signalverbindung 9 kann über kabelgebundene Verbindungen (nicht gezeigt) oder drahtlose Verbindungen erfolgen. Bei entsprechenden drahtlosen Verbindungen müssen bei der Datenverarbeitungsanlage 2 sowie bei dem Zeigegerät 3 entsprechende Sende- und/oder Empfangseinheiten 6, 10 vorgesehen sein. Im einfachsten Fall besteht die Verbindung 9 aus einer einfachen Signalleitung oder -verbindung, mit welcher Signale des Zeigegeräts zur weiteren Verarbeitung an die Datenverarbeitungsanlage übertragen werden, beispielsweise über den Mikrophonanschluss.

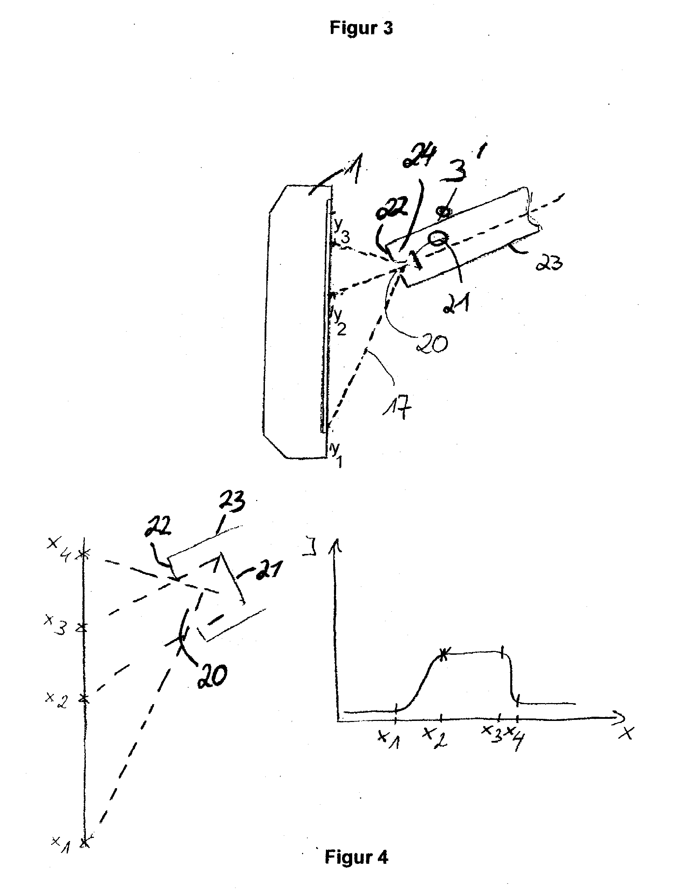

Das Zeigegerät 3 weist eine Abbildungsvorrichtung 12 auf, die in dem Gehäuse des Zeigegeräts aufgenommen ist und ein oder mehrere optische Elemente 13, wie einzelne oder mehrere Linsen, einzelne oder mehrere Blenden usw. umfassen kann. Im einfachsten Fall kann die Abbildungsvorrichtung 12 als eine einfache Lochkamera mit einer einzigen Lochblende oder als einfacher Sensor mit vorgeschalteter Blende ausgebildet sein, wie dies näher in Fig. 3 dargestellt ist. Vorzugsweise ist das Gehäuse bis auf spezielle Lichtöffnungsbereiche lichtundurchlässig ausgebildet, kann jedoch auch transparentes oder halbtransparentes Material, insbesondere in den Lichtöffnungsbereichen, umfassen.

In der Bildebene der Abbildungsvorrichtung 12 ist ein Bildsensor 11, beispielsweise in Form einer CCD-Kamera oder eines CCD-Chips oder ein anderer geeigneter einfacher Flächensensor oder ortsauflösender Sensor vorgesehen.

Mittels des Sensors kann das durch die Abbildungsvorrichtung 12 abgebildete Bild des Monitors 1 oder eines Teils davon detektiert und erfasst werden. Die Positionen der abgebildeten Bezugspunkte 15, 16 bzw. anderer vergleichbarer Strukturen hängen von der Position des Zeigegeräts bzw. Stiftes 3 ab. Dies betrifft zum einen den Abstand des Stiftes 3 vom Monitor 1 sowie zum anderen dessen Ausrichtung zum Monitor 1 als auch die laterale Position über dem Monitor 1.

Durch einen Vergleich der mit dem Sensor 11 erfassten Lichtintensität, insbesondere der erfassten Abbildung des Monitors und somit der Bezugspunkte 15, 16 und der auf dem Monitor durch ein Bezugspunktmodul erzeugten und abgebildeten Bezugspunkte 15, 16 kann eine exakte Positionsbestimmung des Stifts 3 erfolgen. Dazu ist in der Datenverarbeitungsanlage ein Verarbeitungsmodul vorgesehen, welches die Daten und/oder Signale von der optischen Erfassungseinrichtung 11, 12, welche die Abbildungsvorrichtung 12 und den Sensor 11 umfasst, verarbeitet. Diese Daten verwendet ein Positionsbestimmungsmodul mit einer Vergleichseinheit und einer Berechnungseinheit. Die Vergleichseinheit vergleicht die Bezugspunktdaten 15, 16, die auf dem Monitor erzeugt werden, mit denjenigen, die durch die Erfassungseinrichtung 11, 12 erfasst oder aus deren Signalen ermittelt werden. Je nach Abstand des Stifts 3 von dem Monitor 1 sowie der Ausrichtung und Position des Sensors 11 zum Monitor 1 ergeben sich eine unterschiedliche Zahl abgebildeter Bezugspunkte und/oder unterschiedliche Beziehungen der Bezugspunkte 15, 16 untereinander. Aus diesen Unterschieden kann die Berechnungseinheit die exakte Raumposition des Zeigegeräts 3 mit Bezug auf den Monitor 1 erfassen. Zudem ist es möglich der Zeigerposition eine Position auf dem Monitor 1 zuzuordnen, so dass entsprechend der Zeigerposition eine Cursor-Marke gesetzt werden kann. Im einfachsten Fall kann somit die Vorrichtung als Anzeige- und/oder Positioniergerät für eine Cursor-Position angesehen werden, welche in einem nachfolgenden Schritt, beispielsweise durch Betätigung einer Eingabe-Taste oder dergleichen zu einer Dateneingabe in die Datenverarbeitungsanlage führt.

Durch ein weiterhin vorgesehenes Bilderzeugungsmodul, welches auch als Software-Modul in der Datenverarbeitungsanlage 2 realisiert ist, lassen sich aus der Position des Zeigegeräts 3 in Bezug auf den Monitor 1 unter Berücksichtigung von Eingaben mittels eines Eingabemoduls Bilddaten erzeugen, welche auf dem Monitor angezeigt werden können. Beispielsweise kann mittels des Eingabemoduls eingegeben worden sein, dass an der Stelle, welche der Position des Zeigegeräts 3 auf dem Monitor 1 zugeordnet wird, ein bestimmter Farbpunkt entstehen soll, wobei beispielsweise der Abstand des Zeigegeräts vom Monitor 1 die Stärke des Farbpunkts definieren kann. Alternativ kann die Strichstärke oder dergleichen auch durch das Eingabemodul gewählt werden, welches als Bildschirmleiste Auswahlmöglichkeiten anzeigen kann. Durch eine Bewegung des Stifts 3 können dann beliebige Striche mit der gewählten Farbe ausgeführt werden. Durch Veränderung der Einstellungen kann beispielsweise auf eine andere Farbe gewechselt werden oder es können andere Einstellungen hinsichtlich Strichart oder dergleichen vorgenommen werden. Entsprechend kann es sinnvoll sein, an dem Zeigegerät 3 einen Schalter 19 vorzusehen, welcher beispielsweise ermöglicht, den Betriebsmodus des Stifts 3 zwischen der Funktion zur Eingabe von Einstellungen im Eingabemodul oder zur Erzeugung von Bilddaten im Bilderzeugungsmodul zu wechseln. Der Schalter 19 kann insgesamt als Eingabe-Taste (Enter-Taste) Verwendung finden. Allerdings ist ein derartiger Schalter nicht notwendig, da die Eingabe auch direkt auf dem Bildschirm erfolgen kann.

Um eine Anpassung der Bezugspunkte 15, 16 auf die Position des Stifts 3 vornehmen zu können, kann eine Rückkoppelung zwischen den ermittelten Positionsdaten des Zeigegeräts 3 und der Darstellung der Bezugspunkte 15, 16 stattfinden. Bei einem großen Abstand des Zeigegeräts 3 vom Monitor 1 ist eine größere Rasterung, also ein größerer Abstand der Bezugspunkte 15,16 möglich und eventuell auch nötig, wenn die Auflösung der eng beieinander liegenden Bezugspunkte 15,16 durch den Sensor nicht mehr gewährleistet ist. Bei einem nahen Abstand muss die Rasterung und somit auch der Abstand der Bezugspunkte 15, 16 kleiner gewählt werden, falls beispielsweise nicht mehr ausreichend Bezugspunkte 15,16 auf den Sensor abgebildet werden. Damit lässt sich variabel eine gleich bleibende Erfassungsgenauigkeit und Erfassungsqualität unabhängig vom Abstand des Zeigegeräts 3 vom Monitor 1 sicherstellen.

Um eine leichtere Erfassung der verschiedenen Bezugspunkte zu ermöglichen, können die Bezugspunkte auch unterschiedlich gestaltet sein, so dass bereits aus der Erfassung eines einzigen Bezugspunktes sofort erkennbar ist, um welchen Bezugspunkt es sich handelt. Die unterschiedlichen Bezugspunkte können zum Beispiel durch unterschiedliche Farben realisiert werden.

Da der Monitor 1 sowohl als Ausgabegerät für die Bezugspunkte als auch als Ausgabegerät für die erzeugten Bilddaten vorgesehen ist, werden die Bezugspunkte auch in Abhängigkeit von den erzeugten Bilddaten dargestellt und unter Umständen variiert. So können bei Bezugspunkten, die möglicherweise die gleiche Farbe wie die Bilddaten aufweisen, die entsprechenden Farben gewechselt werden. Insgesamt ist somit die Darstellung der Bezugspunkte und der Bilddaten wechselseitig interaktiv.

Um die Darstellung der Bilddaten nicht zu stören, ist es möglich, die Bezugspunkte in einem Farbspektrum, also in einem Wellenlängenbereich oder zeitlich schnell veränderlich darzustellen, welcher für das menschliche Auge nicht erfassbar oder nicht auffällig ist. Gleichzeitig kann die Erfassungseinrichtung 11, 12, also insbesondere der Sensor 11 auf die gewählte Wellenlänge abgestimmt sein. Vor allem ist es möglich, eine Filtereinrichtung in der Abbildungsvorrichtung 12 vorzusehen, die lediglich die Wellenlängen der dargestellten Bezugspunkte 15, 16 durchlässt, während andere Wellenlängen herausgefiltert werden. Dadurch kann die Erfassungsgenauigkeit und Qualität ebenfalls verbessert werden.

Die Figur 2 zeigt in einer perspektivischen Darstellung das Zusammenwirken bzw. die Funktionsweise zwischen Monitor 1 und einer ersten Ausführungsform eines Zeigegeräts 3, bei welchem die Bezugspunkte 15, 16 ortsaufgelöst durch den Sensor 11 erfasst werden. Dargestellt ist zum einen die Monitorausgabe entsprechend mit dem Bezugszeichen 1 des Monitors sowie zum anderen das Bild auf dem Sensor, entsprechend dem Bezugszeichen 11. Die vertikalen Linien 4 und horizontalen Linien 5 mit den erzeugten Bezugspunkten 15, 16 und 17 werden durch die Abbildungsvorrichtung 12 auf dem Sensor 11 als Linien 4' und 5' abgebildet, wobei eine gewisse Verkleinerung oder Vergrößerung stattfinden kann. Entsprechend sind die Bezugspunkte 15, 16, 17 als Bezugspunkte 15', 16', 17' abgebildet.

Durch eine Variation des Abstandes zwischen Monitor 1 und Sensor 11, wie es durch den Doppelpfeil angedeutet ist, verändert sich der auf dem Sensor 11 erfassbare Bildausschnitt, so dass aus der Zahl der erfassten Bezugspunkte 15', 16', 17' der Abstand des Sensors 11 von dem Monitor 1 bestimmt werden kann. Um immer eine ausreichende Anzahl von Bezugspunkten 15, 16, 17 zur Auswahl zu haben, ist die Anzahl der Bezugspunkte 15, 16, 17, die auf dem Monitor 1 dargestellt wird, variabel. Sofern also festgestellt wird, dass bei einer Annäherung des Stifts 3 und somit des Sensors 11 an den Monitor 1 immer weniger Bezugspunkte 15, 16, 17 erfasst werden, kann die Rasterung durch das Bezugspunktemodul in der Datenverarbeitungsanlage 2 derart verändert werden, dass eine kleinere Rasterung mit geringeren Abständen zwischen den Bezugspunkten 15,16, 17 gewählt wird, so dass wieder mehrere Bezugspunkte im Bildfeld des Sensors 11 liegen.

Bei einer exakten parallelen Ausrichtung von Monitor 1 und Sensor 11 stimmen die Positionsdaten im Verhältnis zueinander zwischen den einzelnen Bezugspunkten 15, 16, 17 auf dem Monitor und der abgebildeten Bezugsdaten 15',16', 17' auf dem Sensor 11 überein. Kommt es jedoch zu einer Verdrehung, beispielsweise um die horizontale Achse 19, so ergibt sich eine Verzerrung auf dem Sensor 11, die zu einer abgewandelten Darstellung der vertikalen Linien 4' sowie horizontalen Linien 5' und der entsprechenden Bezugspunkte 15', 16'und 17' führt. Aus der entsprechenden Verzerrung bzw. Lage der abgebildeten Bezugspunkte 15', 16', 17' in der Abbildungsebene, wie dies z.B. durch die Strahlen 14 angedeutet ist, kann auf die Ausrichtung des Sensors 11 bzw. des Zeigegeräts 3 zurückgeschlossen werden. Sofern also mindestens drei in der Bildebene des Monitors 1 verteilte Bezugspunkte 15, 16, 17 vorliegen, kann über die Verzerrung der Abbildung der Bezugspunkte 15, 16, 17 in die Bezugspunkte 15', 16'und 17' die exakte dreidimensionale Ausrichtung des Stifts 3 bestimmt werden.

Über das Bilderzeugungsmodul kann der Position und Ausrichtung des Stifts 3 eine bestimmte Position auf dem Monitor 1 zugeordnet werden, so dass an dieser Position durch das Bilderzeugungsmodul ein Bildpunkt oder ein Flächenbereich erzeugt werden kann.

Die Figur 3 zeigt in einer Seitendarstellung eine weitere Ausführungsform des Zeigegeräts 3', welches eine einfache optische Erfassungseinrichtung mit einer Abbildungsvorrichtung in Form einer Lochblende 22 aufweist, wobei die Lochblende 22 an der Stirnseite des Zeigegeräts 3 ausgeführt ist. Die Blendenöffnung 20 kann hierbei durch ein einfaches transparentes Element, wie Glas verschlossen sein. Außerdem kann die Blendenöffnung die gesamte Stirnseite des Gehäuses 23 einnehmen. Die Blendenöffnung kann unterschiedlichste Formen aufweisen, wie kreisrund, 3,- 4- oder mehreckig oder durch Streben oder sonstige Unterteilungen in mehrere Öffnungen unterteilt sein.

Bei der Ausführungsform der Figur 3 ist statt eines ortsauflösenden Sensors 11 wie in der Ausführungsform der Figur 1 und 2, mit welchem die auf dem Sensor 11 unmittelbar abgebildeten Bezugspunkte 15, 16 und 17 ortsaufgelöst erfasst werden, lediglich ein einfacher Flächendetektor 21 vorgesehen, welcher in Abhängigkeit der auftreffenden Lichtintensität ein beispielsweise proportionales Ausgangssignal erzeugt. Durch die flächenhafte Gestaltung des Flächendetektors 21 wird bei einer nur teilweisen Ausleuchtung der Sensorfläche das Ausgangssignal niedriger sein als bei einer Ausleuchtung einer größeren Teilfläche oder gar einer vollflächigen Ausleuchtung. Darüber hinaus kann der Flächendetektor 21 so eingestellt sein, dass lichtintensitätsunabhängig ein entsprechendes Ausgangssignal erzeugt wird, wenn Licht mit einer Intensität über einem bestimmten Schwellwert auftrifft. Entsprechend kann der Flächendetektor 21 in eine Vielzahl von Unterbereichen unterteilt sein, bei denen jeweils durch das Auftreffen einer bestimmten Lichtintensität ein Ausgangssignal erzeugt wird, das durch Addition der vielen Unterbereiche zu einem Gesamtausgangssignal oder in sonstiger Weise kombiniert wird. In diesem Fall kann also durch eine höhere auftreffende Lichtintensität keine größere Ausgangsleistung des Ausgangssignals erzeugt werden, sondern lediglich durch ein Ausleuchten einer größeren Anzahl von Unterbereichen der aktiven Sensorfläche.

Bei einem derartigen einfachen Flächendetektor kann in Kombination mit einer Lochblende 22 bzw. der entsprechenden Lichteintrittsöffnung 20 aufgrund des erzeugten Ausgangssignals des Flächendetektors 21 eine Positions- und Ausrichtungsbestimmung des Zeigegeräts 3' vorgenommen werden. Da lediglich durch die Blendenöffnung 20 Licht auf den Flächendetektor 21 gelangen kann, während die Lochblende 22 bzw. die Wände des Gehäuses 23 verhindern, dass Licht auf andere Weise auf den Flächendetektor 21 gelangen kann, kann die Ausleuchtung der Sensorfläche zur Positionsbestimmung verwendet werden. Entsprechend ist ein Sensorraum 24 definiert, in dem der Flächendetektor 21 angeordnet ist, der einerseits durch die stirnseitige Lochblende 22 und andererseits durch die Mantelfläche des zylinderrohrartigen Gehäuses 23 des Zeigegeräts 3' gebildet ist.

Aufgrund der einzigen Lichteinfallsöffnung 20 gelangt Licht nur aus bestimmten Bereichen des Bildschirms 1 auf den Flächendetektor 21. Die Grenzen sind bei den mit y1 und y3 gekennzeichneten Punkten gegeben. Ein Lichtpunkt oberhalb oder unterhalb dieser Grenzen kann kein Licht aussenden, welches auf den Flächendetektor 21 gelangen könnte, da das Gehäuse 23 und die Lochblende 22 den Flächendetektor 21 in diesem Bereich abschirmen. Nur Lichtpunkte in dem Zwischenbereich zwischen dem mit y1 und y3 gekennzeichneten Punkten können Licht aussenden, welches auf den Flächendetektor 21 gelangt. Beispielsweise kann ein Lichtpunkt an der Position y2 Licht aussenden, welches den gesamten aktiven Sensorbereich des Flächendetektors 21 überdeckt.

Werden nun auf dem Bildschirm 1 durch das Bezugspunktemodul mehrere Bezugspunkte dargestellt, die als Lichtpunkte Licht aussenden, so wird je nach Position des Zeigegeräts 3' und der Position der Bezugspunkte auf dem Bildschirm 1 eine bestimmte Lichtverteilung auf dem Flächendetektor 21 gegeben sein. Bei einem Flächendetektor, der in Abhängigkeit der eingestrahlten Lichtintensität und/oder des überstrahlten Sensorbereichs ein entsprechendes Ausgangssignal abgibt, kann aus dem Ausgangssignal und der durch das Bezugspunktemodul bekannten Position der Bezugspunkte die Position und Ausrichtung des Zeigegeräts 3' bestimmt werden.

Insbesondere kann zusätzlich oder alternativ eine dynamische Veränderung der Bezugspunkte, die sich daraus ergebende Änderung des Lichteinfalls auf den Flächendetektor 21 sowie die sich daraus wieder ergebende Veränderung des Ausgangssignals herangezogen werden, um die Bestimmung der Position und Ausrichtung des Zeigegeräts 3' zu ermöglichen.

Ferner kann eine dynamische Veränderung der Bezugspunkte dazu genutzt werden eine Reduzierung der dargestellten Bezugspunkte vorzunehmen, im Extremfall auf einen einzigen sich bewegenden Bezugspunkt.

Bei einem oder wenigen sich bewegenden Bezugspunkten kann ein Flächendetektor 21 eingesetzt werden, der lediglich schwellwertabhängig aufgrund des überstrahlten Flächenbereichs ein Ausgangssignal abgibt. In diesem Fall ist es nämlich nicht erforderlich, die Überlagerung von Lichtintensitäten verschiedener Bezugspunkte auf dem Flächendetektor 21 zu ermitteln, sondern es genügt die durch die Bewegung des Bezugspunktes sich ergebende Änderung der Lichtüberstrahlung des aktiven Sensorbereiches zu erfassen.

In Figur 4 ist in zwei Teilbildern die Wirkungsweise einer derart einfach aufgebauten Erfassungseinrichtung mit einem in einem Sensorraum teilweise vor Lichteinfall geschützten Flächendetektor gezeigt.

Im linken Teilbild ist vergrößert die Darstellung der Figur 3 wiedergegeben, wobei durch die Punkte x₂ und x₃ der Bereich angegeben ist, in welchem Lichtpunkte die gesamte aktive Sensorfläche des Flächendetektors 21 ausleuchten. Entsprechend ergibt sich abhängig von der Position eines Lichtpunktes ein Intensitätsprofil, so wie es schematisch im rechten Teilbild der Figur 4 wiedergegeben ist. Demgemäß verändert sich die Intensität des eingestrahlten Lichts auf den Flächendetektor 21 und somit das entsprechende Ausgangssignal des Flächendetektors 21 bei einer Bewegung des Lichtpunktes von der Position x₁ zur Position x₄, wie im rechten Teilbild der Figur 4 dargestellt. Bei einer Position des Lichtpunktes außerhalb des detektierbaren Bereichs ist die Intensität des auf dem Flächendetektor 21 ankommenden Lichts bzw. die entsprechende Größe des Ausgangssignals des Flächendetektors 21 null bzw. weist einen Wert im Bereich des Grundrauschens auf, welches z. B. durch die übrige Monitordarstellung verursacht ist. Sobald der Lichtpunkt die Position x₁ erreicht, fällt das erste Licht auf den Flächendetektor 21. Entsprechend nimmt die von dem Flächendetektor ermittelte Lichtintensität bei einer Bewegung in Richtung x₂ zu, wo sie den Maximalwert erreicht, da ab dieser Position die gesamte Fläche des Flächendetektors 21 ausgeleuchtet ist. Zwischen der Position x₂ und x₃ ergibt sich ein Bereich maximaler Intensität, wobei an jedem der Punkte zwischen x₂ und x₃ ein entsprechender Lichtpunkt Licht so ausstrahlt, dass immer der gesamte Sensorbereich des Flächendetektors 21 ausgeleuchtet wird, allerdings mit unterschiedlichen Öffnungswinkeln der Lichtkegel. Zwischen den Punkten x₃ und x₄ nimmt die Lichtintensität wieder ab, da dann ein Teil des Lichts bereits durch die Lochblende 22 abgeschottet wird. Außerhalb der Position x₄ liegt die Intensität wieder bei null oder im Grundrauschen bzw. der Helligkeit des den Bezugspunkten überlagerten Bildes. Da aufgrund der Neigung des Zeigegeräts 3' der Bereich, in welchem Lichtpunkte einen Teil ihres Lichts auf den Flächendetektor 21 richten können, zwischen x₃ und x₄ anders ist als in dem Bereich zwischen den Punkten x₁ und x₂, nimmt die Intensität zwischen den Punkten x₃ und x₄ deutlich schneller ab, als sie zwischen x₁ und x₂ zunimmt.

Aufgrund eines Punktverlaufs auf dem Monitor 1, welcher durch das Bezugspunktmodul erzeugt wird und von daher bzgl. der Daten genau bekannt ist, kann aufgrund des ermittelten Intensitätsverlaufs durch den Flächendetektor 21 die Position und Ausrichtung des Zeigegeräts bestimmt werden. Obwohl das Ausführungsbeispiel so beschrieben ist, dass die Bezugspunkte durch eine erhöhte Lichtintensität charakterisiert sind, kann alternativ auch eine verringerte Lichtintensität, also eine invertierte Darstellung der Bezugspunkte Verwendung finden.

Statt einer Bewegung eines Bezugspunktes bzw. einer Lichtquelle oder Lichtpunktes können mehrerer statische Bezugs- bzw. Lichtpunkte vorgesehen sein, die zu einer charakteristischen Intensitätsüberlagerung beitragen oder es können mehrerer dynamische, also bewegliche Bezugspunkte bzw. Lichtpunkte vorgesehen sein. Auch eine Kombination von statischen und dynamischen Bezugspunkten ist möglich.

Nach einer weiteren Ausführungsform kann der einfache Flächendetektor 21 wiederum durch einen ortsauflösenden Sensor oder einen CCD-Chip ersetzt werden und die Lochblende 22 kann so ausgeführt werden, dass lediglich eine punktförmige Lochblendenöffnung 20 vorhanden ist, so dass eine einfache Lochkamera entsteht.

In diesem Fall ist durch die Blendenöffnung 20 der vom Sensor 21 erfassbare Bildausschnitt durch die Punkte x₁ und x₃ gemäß Figur 3 begrenzt. Durch die Lage der Punkte x₁ bis x₃ in der Bildebene des Sensors 21 kann auf Grund der Kenntnis der Lage der Punkte auf dem Monitor die exakte Positionierung und Ausrichtung des Zeigegeräts sehr einfach bestimmt werden.

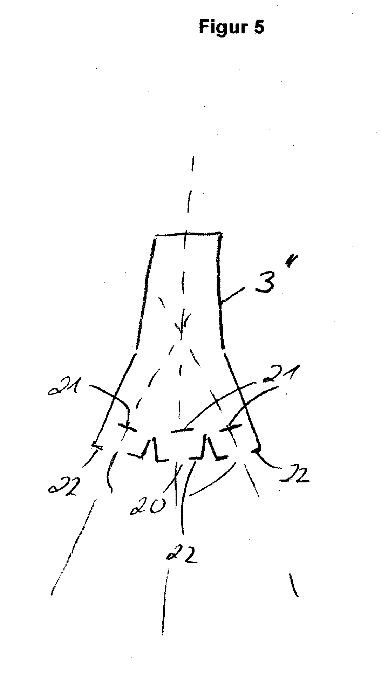

Figur 5 zeigt eine weitere Ausführungsform des erfindungsgemäßen Zeigegeräts 3", bei welchem mehrere der Erfassungseinrichtungen, nämlich insgesamt 3, wie sie in den Figuren 3 und 4 dargestellt sind, vorgesehen sind. Die Erfassungseinrichtungen mit jeweils einem Sensor 21, einer Lochblende 22 und einer entsprechenden Blendenöffnung 20 können versetzt von der Mittelachse des Zeigegeräts 3" parallel zueinander angeordnet sein oder mit einer entsprechenden winkeligen Orientierung ihrer Längsachsen zueinander. Auf diese Weise lassen sich die Bezugspunkte des Monitors von mehreren Erfassungseinrichtungen unabhängig erfassen und aus den ermittelten Werten wiederum die genaue Position und/oder Orientierung oder Ausrichtung des Zeigegeräts 3" bestimmen.

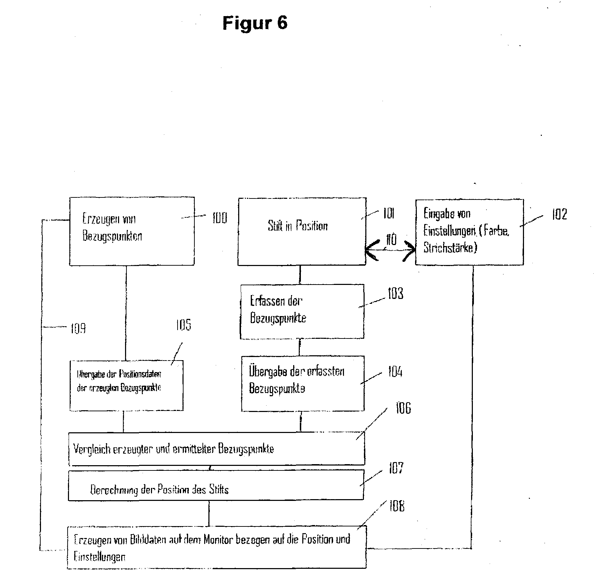

Die Fig. 6 zeigt in einem Schemadiagramm den Ablauf eines entsprechenden Verfahrens für die Ausführungsform der Figur 1. Zunächst werden im Schritt 100 durch das Bezugspunktemodul die Bezugspunkte 15, 16, 17 auf dem Monitor 1 erzeugt.

Der Stift wird entsprechend im Schritt 101 in Position vor dem Monitor 1 gebracht, wobei zwischen einem Zeichen- oder Schreibmodus einerseits und einem Eingabemodus für Einstellungen andererseits mit dem Schalter 19 gewechselt werden kann. Dies ist durch den Doppelpfeil 110 symbolisiert. Im Schritt 102 kann entsprechend eine Eingabe von Einstellungen erfolgen, beispielsweise dahingehend, mit welcher Farbe, Strichstärke oder Art von Zeichengerät man arbeiten möchte. Allerdings ist hierfür nicht, wie bereits oben beschrieben, notwendigerweise ein Schalter 19 erforderlich.

Sobald der Stift 3 entsprechend des Schrittes 101 in einer Position ist, in der er Bezugspunkte 15, 16, 17 die auf dem Monitor 1 dargestellt werden, erfassen kann, werden diese im Schritt 103 von der Erfassungseinrichtung 11, 12, erfasst und die ermittelten Bezugspunkte 15', 16', 17'werden im Schritt 104 an die Verarbeitungseinheit über die drahtlose Funkverbindung 9 übergeben.

Gleichzeitig übergibt das Bezugspunktemodul im Schritt 105 die Daten der erzeugten Bezugspunkte 15, 16, 17 an die Verarbeitungseinheit, welche im Schritt 106 in der Vergleichseinheit diese mit den erfassten Bezugspunkten 15', 16', 17' vergleicht und nach Identifizierung vorzugsweise Relationen zwischen den einzelnen Bezugspunkten 15, 16, 17, bzw. 15', 16', 17' herstellen kann.

Aus diesen Relationen, die im Schritt 107 an die Berechnungseinheit übergeben werden, berechnet die Berechnungseinheit die absolute Position des Zeigegeräts 3 im Bezug auf den Monitor 1.

Aus den Positionierungsdaten des Zeigegeräts 3, die von der Berechnungseinheit im Schritt 107 ermittelt werden, können von dem Bilderzeugungsmodul im Schritt 108 unter Verwendung der Eingabedaten bzgl. der Einstellungen aus dem Schritt 102 Bilddaten erzeugt werden, welche auf dem Monitor angezeigt und natürlich auch in der Datenverarbeitungsanlage 2 gespeichert werden können. Durch eine Bewegung des Stifts 3 können Linien, Schriften oder dergleichen erzeugt werden. Durch einen zwischenzeitlichen Wechsel der Einstellungen mittels des Schalters 19 bzw. gemäß dem Vorgang 110 können unterschiedliche Farben, Strichstärken, Stricharten und dergleichen gewählt werden.

Wie durch die Linien 109 dargestellt, kann es zwischen den Schritten 107 und 100 zu einem interaktiven und iterativen Prozess kommen, bei welchem die dargestellten Bezugspunkte 15, 16 auf die Position des Stifts 3 abgestimmt werden. Dies kann beispielsweise dadurch erfolgen, dass die Anzahl der Bezugspunkte, die Lichtintensität, die Form, die Farbe bzw. Wellenlänge der Bezugspunkte sowie auch der Bereich, in welchem auf dem Bildschirm 1 überhaupt Bezugspunkte dargestellt werden, verändert werden. Beispielsweise ist es nicht erforderlich in einer oberen Hälfte des Monitors 1 Bezugspunkte zu erzeugen und darzustellen, wenn der Zeiger 3 gemäß seiner Position und/oder Ausrichtung der unteren Hälfte zugeordnet ist.

Das in Figur 6 gezeigte Ablaufschema kann in ähnlicher Weise auch für die in den Figuren 3 bis 5 dargestellten Erfassungseinheiten verwirklicht werden, wobei lediglich die Schritte 100, 106 und 107 in anderer Weise durchgeführt werden. Hier ist es dann beispielsweise nicht erforderlich Relationen zwischen den einzelnen Bezugspunkten zu bilden, sondern die Ermittlung der Position und Ausrichtung des Zeigegeräts 3' erfolgt durch eine Intensitätsauswertung des vom Flächendetektor 21 erfassten Lichts der statischen und/oder dynamischen Bezugspunkte, welche in örtlicher und/oder zeitlicher Korrelation mit den auf dem Bildschirm 1 erzeugten Bezugspunkten erfolgen kann.

Obwohl die vorliegende Erfindung mit Bezug auf die vorgestellt Ausführungsform detailliert beschrieben worden ist, ist für den Fachmann selbstverständlich, dass Abänderungen oder Modifikationen, insbesondere hinsichtlich der andersartigen Kombination einzelner vorgestellter Merkmale oder Weglassen einzelner Merkmale möglich sind, ohne den Schutzbereich der beigefügten Ansprüche zu verlassen. Insbesondere ist selbstverständlich, dass sämtliche Kombinationen oder Unterkombinationen der vorgestellten Merkmale als zur Erfindung gehörig beansprucht werden.

## Patentansprüche

1. Vorrichtung für eine Datenverarbeitungsanlage (2) mit mindestens einem Monitor (1) zur Anzeige und/oder Eingabe einer Bildschirmposition umfassend mindestens ein Zeigegerät (3, 3', 3 "), welches mindestens eine Erfassungseinrichtung aufweist und Mittel für eine Daten- und/oder Signalverbindung mit der Datenverarbeitungsanlage umfasst,
**dadurch gekennzeichnet, dass**
ein Bezugspunktemodul zur Erzeugung von mindestens einem Bezugspunkt auf dem Monitor und ein Verarbeitungsmodul zur Verarbeitung der Daten und/oder Signale von der Erfassungseinrichtung vorgesehen sind, wobei eine Positionsbestimmungseinheit zur Bestimmung der Raumposition und/oder Orientierung oder Ausrichtung des Zeigegeräts (3, 3', 3 ") durch Vergleich der Lagepositionen der Bezugspunkte (15, 16, 17) auf dem Monitor und der durch die Erfassungseinrichtung erfassten Daten und/oder Signale vorgesehen ist.

2. Vorrichtung nach Anspruch 1,
**dadurch gekennzeichnet, dass**
die Mittel für die Daten- und/oder Signalverbindung kabelgebundene oder drahtlose Verbindungen umfassen, insbesondere über Signalschnittstellen der Datenverarbeitungsanlage, vorzugsweise die Mikrophonschnittstelle.

3. Vorrichtung nach Anspruch 1 oder 2,
**dadurch gekennzeichnet, dass**
die Erfassungseinrichtung eine optische Sensoreinrichtung umfasst.

4. Vorrichtung nach einem der vorhergehenden Ansprüche,
**dadurch gekennzeichnet, dass**
die Erfassungseinrichtung eine optische Abbildungseinrichtung, insbesondere Fokussiereinrichtung umfasst, die jeweils ein oder mehrere Blenden, Prismen und/oder optische Linsen und/oder Spiegel und/oder Filter aufweist.

5. Vorrichtung nach Anspruch 3,
**dadurch gekennzeichnet, dass**
die Sensoreinrichtung einen flächigen oder punktförmigen Sensor, insbesondere Hell-Dunkel-Sensor, einen ortsauflösenden optischen Sensor und/oder einen CCD (charge coupled device) - und/oder CMOS (complementary metal oxide semicondutor) -Chip umfasst.

6. Vorrichtung nach einem der vorhergehenden Ansprüche,
**dadurch gekennzeichnet, dass**
ein Eingabemodul vorgesehen ist, welches die Eingabe von Einstellungs- und/oder Bediendaten über unterschiedliche Eingabegeräte der Datenverarbeitungsanlage umfassend das Zeigegerät, Tastaturen, Speichermittellesegeräte, aktive, insbesondere drucksensitive Displays, Datenfernleitungen und/oder Netzwerke ermöglicht.

7. Vorrichtung nach einem der vorhergehenden Ansprüche,
**dadurch gekennzeichnet, dass**
ein Bilderzeugungsmodul vorgesehen ist, welches Bilddaten zur Anzeige auf dem Monitor erzeugt.

8. Vorrichtung nach Anspruch 7,
**dadurch gekennzeichnet, dass**
das Bilderzeugungsmodul eine Schreib- und/oder Maleinheit umfasst, welche aus den Positionsdaten des Zeigegeräts und Eingabedaten Bilddaten zur Darstellung auf dem Monitor erzeugt.

9. Vorrichtung nach einem der vorhergehenden Ansprüche,
**dadurch gekennzeichnet, dass**
das Bezugspunktemodul, das Bilderzeugungsmodul, das Eingabemodul, das Verarbeitungsmodul und/oder das Positionsbestimmungsmodul durch ausführbare Programmeinheiten auf einer oder mehreren Datenverarbeitungsanlagen realisiert sind.

10. Vorrichtung nach einem der vorhergehenden Ansprüche,
**dadurch gekennzeichnet, dass**
das Bezugspunktemodul und das Positionsbestimmungsmodul mit einander rückgekoppelt sind, so dass in Abhängigkeit der Positionsdaten aus dem Positionsbestimmungsmodul angepasste Bezugspunkte erzeugt werden.

11. Vorrichtung nach einem der vorhergehenden Ansprüche,
**dadurch gekennzeichnet, dass**
das Gehäuse einen aus lichtundurchlässigen Wänden gebildeten Sensorraum zur Aufnahme der Sensoreinrichtung aufweist, in welchem die Sensoreinrichtung aufgenommen ist, wobei der Sensorraum eine Öffnung aufweist, durch welche Licht auf die Sensoreinrichtung gelangen kann, und wobei der Sensorraum und die Öffnung so angeordnet sind, dass nur Licht eines bestimmten Lichtkegels mit einem definierten Öffnungswinkel auf die Sensoreinrichtung gelangen kann.

12. Vorrichtung nach Anspruch 11,
**dadurch gekennzeichnet, dass**
die Öffnung des Sensorraums mit Abstand gegenüberliegend der Sensoreinrichtung vorgesehen ist, wobei der Abstand der Öffnung (20) von der Sensoreinrichtung und die Flächen der Öffnung und der aktiven Sensorfläche und/oder eine Abbildungsvorrichtung die detektierbaren Lichtkegel bestimmen.

13. Vorrichtung nach einem der Ansprüche 11 bis 12,
**dadurch gekennzeichnet, dass**
die Öffnung des Sensorraums größer ist als die aktive Sensorfläche der Sensoreinrichtung.

14. Vorrichtung nach einem der Ansprüche 11 bis 13,
**dadurch gekennzeichnet, dass**
der Abstand der Öffnung des Sensorraums zur Sensoreinrichtung größer ist als die Breite und/oder Länge der aktiven Sensorfläche der Sensoreinrichtung.

15. Vorrichtung nach einem der Ansprüche 11 bis 14,
**dadurch gekennzeichnet, dass**
die Sensoreinrichtung einen runden, ovalen oder eckigen Flächensensor umfasst, welcher als intensitätsabhängiger Sensor, als ortsauflösender Sensor oder als CCD-Sensor ausgebildet ist.

16. Vorrichtung nach einem der Ansprüche 11 bis 15,
**dadurch gekennzeichnet, dass**
die Öffnung als runde, ovale oder eckige Flächenöffnung oder als punktförmige Öffnung ausgebildet ist.

17. Vorrichtung nach einem der Ansprüche 11 bis 16,
**dadurch gekennzeichnet, dass**
der Sensorraum als Zylinder- oder Quaderhohlraum an einem Ende eines länglichen zylinder- oder quaderförmigen Gehäuses (23) vorgesehen ist.

18. Vorrichtung nach einem der Ansprüche 11 bis 17,
**dadurch gekennzeichnet, dass**
das Zeigegerät als Stift, Pinsel oder Zeichengerät ausgebildet ist.

19. Verfahren zur Bestimmung der Position eines Zeigegeräts in Bezug auf einen Monitor umfassend:
• Bereitstellung einer Datenverarbeitungsanlage mit einem Monitor;
• Bereitstellung eines Bezugspunktemoduls und eines Positionsbestimmungsmoduls in mindestens einer Datenverarbeitungsanlage und/oder einem Zeigegerät;
• Bereitstellung eines Zeigegeräts mit einer Erfassungseinrichtung;
• Erzeugen von Bezugspunkten auf dem Monitor durch das Bezugspunktemodul;
• Erfassen der Bezugspunkte durch die Erfassungseinrichtung des Zeigegeräts;
• Verarbeitung der Positionsdaten der durch das Bezugspunktemodul erzeugten Bezugspunkte und der durch die Erfassungseinrichtung erzeugten und/oder erfassten Daten und/oder Signale und Bestimmung der exakten Position und/oder Ausrichtung des Zeigegeräts zum Monitor durch Vergleich der Positionsdaten der Bezugspunkte und der von der Erfassungseinrichtung erfassten und/oder erzeugten Daten und/oder Signale;
• Zuordnung der Raumposition und/oder Ausrichtung oder Orientierung des Zeigegeräts zu einer Position und/oder Darstellung auf dem Monitor.

20. Verfahren nach Anspruch 19,
**dadurch gekennzeichnet, dass**
die Positionsbestimmung des Zeigegeräts einen Vergleich von Relationen der Daten und/oder Signale ein oder mehrere Bezugspunkte zueinander umfasst.

21. Verfahren nach Anspruch 19 oder 20,
**dadurch gekennzeichnet, dass**
mindestens ein, vorzugsweise drei Bezugspunkte, die außerhalb einer Gerade liegen, erzeugt und/oder erfasst und/oder der Bestimmung der Position zugrunde gelegt werden.

22. Verfahren nach einem der Ansprüche 19 bis 21,
**dadurch gekennzeichnet, dass**
die Bezugspunkte statisch und/oder dynamisch, insbesondere über den Monitor beweglich auf dem Monitor angezeigt werden.

23. Verfahren nach einem der Ansprüche 19 bis 22,
**dadurch gekennzeichnet, dass**
die Bezugspunkte unterschiedlich darstellbar und/oder über der Anzeigedauer veränderlich sind, insbesondere hinsichtlich der Darstellungswellenlänge (Farbe), Form, Anzahl und/oder Verteilung auf dem Monitor.

24. Verfahren nach einem der Ansprüche 19 bis 23,
**dadurch gekennzeichnet, dass**
die Erzeugung der Bezugspunkte in Abhängigkeit der Position und/oder Ausrichtung des Zeigegeräts, insbesondere in Art eines Regelkreises erfolgt.

25. Verfahren nach einem der Ansprüche 19 bis 24,
**dadurch gekennzeichnet, dass**
ein Bilderzeugungsmodul bereit gestellt wird, welches Bilddaten zur Anzeige auf dem Monitor erzeugt.

26. Verfahren nach Anspruch 25,
**dadurch gekennzeichnet, dass**
das Zeigegerät zur Erzeugung von Bilddaten eingesetzt wird.

27. Verfahren nach einem der Ansprüche 25 oder 16,
**dadurch gekennzeichnet, dass**
die Bezugspunkte in ihrer Darstellung auf die erzeugten Bilddaten abgestimmt werden.

28. Computerprogrammprodukt mit einer speicherbaren Signalfolge zur Ausführung auf einer Datenverarbeitungsanlage, welches das Verfahren nach einem der Ansprüche 19 bis 27 durchführt oder durchführbar macht, wenn es in einer Datenverarbeitung ausgeführt wird.
